Europäisches Patentamt

European Patent Office

Office européen des brevets

(19)

(11) Veröffentlichungsnummer: **0 244 432**
**B1**

(12) **EUROPÄISCHE PATENTSCHRIFT**

(45) Veröffentlichungstag der Patentschrift: **13.06.90**

(21) Anmeldenummer: **86905734.9**

(22) Anmeldetag: **03.10.86**

(86) Internationale Anmeldenummer:
**PCT/DE86/00403**

(87) Internationale Veröffentlichungsnummer:
**WO 87/01997 09.04.87 Gazette 87/08**

(51) Int. Cl.⁵: **B 60 R 22/46**

(54) **SEILAUFNAHME FÜR SEILKUPPLUNG.**

(30) Priorität: **03.10.85 DE 3535316**

(43) Veröffentlichungstag der Anmeldung:
**11.11.87 Patentblatt 87/46**

(45) Bekanntmachung des Hinweises auf die
Patenterteilung:
**13.06.90 Patentblatt 90/24**

(84) Benannte Vertragsstaaten:
**DE FR GB**

(56) Entgegenhaltungen:
**DE-A-3 040 667**
**DE-A-3 231 509**

(73) Patentinhaber: **Allied Engineering Company S.A.**
**15, Boulevard Roosevelt**
**L-2450 Luxembourg (LU)**

(72) Erfinder: **KOCK, Hans-Otto**
**Segeberger Strasse 42**
**D-2359 Kisdorf (DE)**
Erfinder: **LACHER, Bernd**
**Reeperbahn 17**
**D-2300 Kiel (DE)**

(74) Vertreter: **Weber, Dieter, Dr. et al**
**Dr. Dieter Weber und Dipl.-Phys. Klaus Seiffert**
**Patentanwälte Gustav-Freytag-Strasse 25**
**Postfach 6145**
**D-6200 Wiesbaden 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Seilaufnahme für die Seilkupplung einer Rückstrammvorrichtung für einen Sicherheitsgurtaufrollautomaten, mit einem Kupplungsraum, in welchem ein eine Wikkelwelle bzw. eine mit dieser kraftschlüssig verbundene Seilscheibe im Abstand mindestens teilweise umschlingendes Seil reibschlüssig mit der Wickelwelle bzw. der Seilscheibe in Verbindung bringbar ist, einem Seilspeicher für den freien Endabschnitt des Seiles, einem Seilauslauf für das aus dem Kupplungsraum geführte, mit einer Zugvorrichtung verbundene Seil, einem Seileinlauf vom Seilspeicher in den Kupplungsraum hinein und einer Seilbremse, durch welche das Seil geführt ist, vor dem Seileinlauf.

Eine derartige Vorrichtung ist bekannt aus der DE—OS 33 28 874.

Moderne Aufrollautomaten für Sicherheitsgurte weisen häufig eine sogenannte Rückstrammvorrichtung bzw. einen Rückstraffer auf. Eine derartige Rückstrammvorrichtung besteht zumeist aus einem Zugseil, welches einerseits mit einer Antriebsvorrichtung fest in Verbindung steht, während das andere Ende des Seiles im Normalbetrieb keine Verbindung zur Wickelwelle des Aufrollautomaten hat, jedoch im Bedarfsfall schnell und sicher mit der Wickelwelle gekuppelt bzw. verbunden werden muß.

In der oben genannten Schrift wird eine derartige Kupplungsvorrichtung beschrieben, bei welcher das Zugseil mit radialem Spiel eine Wickelwelle bzw. eine mit der Wickelwelle fest verbundene Zugmittelrolle oder Seilscheibe umschließt, so daß bei der plötzlichen Zugbelastung des Seiles durch die Zugvorrichtung dieses sich eng an die Zugmittelrolle bzw. Seilscheibe anlegt und diese (in Rückwärtsrichtung) antreibt und damit den Sicherheitsgurt straff zieht.

Das Zugseil ist mit etwa ein bis zwei Windungen um die Seilscheibe herumgelegt und muß, damit zwischen Seilscheibe und Seil eine kraftschlüssige Verbindung entsteht, an dem anderen, von der Seilscheibe fortführenden Ende unter einer gewissen Seilspannung gehalten werden. Die Bedingung dafür, daß eine kraftschlüssige Verbindung zwischen Seil und Seilscheibe besteht ist gegeben durch die sogenannte Eulersche Beziehung: $S_1 \leq S_2 e^{\mu\alpha}$. Hierbei ist $S_1$ die Seilspannung, welche durch die Zugvorrichtung hervorgerufen wird, $S_2$ ist die Seilspannung, welche am anderen Ende des Seiles wirkt, $\mu$ ist der Reibungskoeffizient zwischen Seil und Seilscheibe und $\alpha$ ist der Umschlingungswinkel (im allgemeinen 360° bis 720°). Damit das Seil also nicht auf der Seilscheibe gleitet, muß die Gegenspannung $S_2$, multipliziert mit $e^{\mu\alpha}$ größer sein als die Zugspannung $S_1$.

Aus diesem Grund ist im Seilspeicher eine entsprechende Vorrichtung erforderlich, durch welche das zur Seilscheibe führende Teilstück unter einer entsprechenden Seilspannung gehalten wird.

Wird die Zugvorrichtung des Rückstraffers ausgelöst, so wird das Seil zunächst sehr schnell aus dem Seilauslauf herausgezogen, wobei sich seine Windungen sehr fest an die Seilscheibe anlegen. Bei der weiteren Bewegung des Zugseiles aus dem Seilauslauf hinaus wird dann bei kraftschlüssiger Verbindung zwischen Seil und Seilscheibe letztere durch die Seilbewegung gedreht. Dabei wickelt sich in Richtung der Zugvorrichtung das Seil von der Seilscheibe ab, während das unter Spannung nachgeführte freie Ende des Seiles sich auf die Seilscheibe aufwickelt. Entsprechend der Zahl der gewünschten Aufwickeldrehungen der Wickelwelle muß ein genügender Teil des Seiles als freies Ende im Seilspeicher vorhanden sein, da die kraftschlüssige Verbindung zwischen Seil und Seilscheibe aufhört, sobald das Seilende den Seilspeicher bzw. die entsprechende Spannvorrichtung verläßt.

Eine derartige Vorrichtung ist im allgemeinen eine Seilbremse, durch welche das Seil nur unter Überwindung eines gewissen Reibwiderstandes gezogen werden kann, so daß es zwischen der Seilbremse und der in Zugrichtung folgenden Seilscheibe unter der Vorspannung $S_2$ steht. Der Seileinlauf vom Seilspeicher auf die Seilscheibe liegt, in axialer Richtung gesehen, immer auf derselben Höhe. Während des Rückstrammvorganges jedoch, bei welchem das Zugseil auf der einen Seite ab- und auf der anderen Seite aufgewickelt wird, wandert das Seil entlang einer spiralförmigen Kurve auf der Seilscheibe in axialer Richtung. Dies führt dazu, daß oft schon nach weniger als einer einzigen Umdrehung der Seilscheibe eine aufgewickelte Windung in axialer Richtung auf Höhe des Seileinlaufes liegt, so daß wegen der Zugspannung $S_2$, welche in dem einlaufenden Seil wirkt, das einlaufende Seil sich über eine bereits auf der Seilscheibe vorhandene Seilwindung liegt.

Abgesehen davon, daß durch übereinanderliegende Seilwindungen der Abwickelvorgang am Seilauslauf behindert wird, so besteht vor allem die Gefahr, daß sich zwei übereinanderliegende Seilwindungen zwischen Seilscheibe und der äußeren Wand des Kupplungsraumes verklemmen. Diese Gefahr ist um so größer, als der radiale Abstand zwischen Seilscheibe und Wand des Kupplungsraumes möglichst gering gewählt wird und nur wenig mehr als einen Seildurchmesser beträgt.

Durch den geringen Abstand zwischen dem Kupplungsseil, welches an der Wand des Kupplungsraumes anliegt ohne die Seilscheibe zu berühren, solange die Rückstrammvorrichtung außer Betrieb ist, will man erreichen, daß beim Auslösen der Rückstrammvorrichtung ein möglichst geringer Schlupf auftritt und das Seil möglichst unmittelbar mit der Seilscheibe kuppelt, d.h. kraftschlüssig in Verbindung tritt.

Liegen jedoch zwei Seilwindungen in dem entsprechend engen Zwischenraum aufeinander, so werden sie zwischen Seilscheibe und Wand des Kupplungsraumes eingeklemmt und behindern so den Rückstrammvorgang ganz erheblich. Auf jeden Fall führt ein solches Verklemmen zu einem erheblichen Leistungsverlust des Rückstraffers, so daß dessen Zugvorrichtung entsprechend größer dimensioniert sein muß.

Darüberhinaus ist nach erfolgtem Rückstrammvorgang durch das verklemmte Seil die Wickelwelle praktisch blockiert und der extrem gestraffte Gurt ist praktisch nicht mehr anlegbar. Dies mach sich vor allem dann unangenehm bemerkbar, wenn der Rückstrammvorgang bereits durch einen kleineren Unfall ausgelöst wurde oder auf eine Fehlfunktion zurückgeht. In einem solchen Fall könnte das betreffende Fahrzeug durchaus noch fahrtüchtig sein, der Sicherheitsgurt wäre jedoch nur mit Mühe oder überhaupt nicht anzulegen und wäre auf jeden Fall unbequem. Da die gültigen Verkehrsvorschriften das Anlegen des Sicherheitsgurtes auf jeden Fall verlangen, wäre unter Umständen allein aufgrund einer nicht voll funktionsfähigen Sicherheitsgurtautomatik das Abschleppen des Fahrzeuges erforderlich.

Der Erfindung liegt daher die Aufgabe zugrunde, eine Seilaufnahme für die Seilkupplung eines Sicherheitsgurtaufrollautomaten mit Rückstrammvorrichtung zu schaffen, bei der trotz geringem Schlupf aufeinanderliegende Seilwindungen nicht verklemmen können.

Diese Aufgabe wird dadurch gelöst, daß die den Kupplungsraum nach außen abschließende Wand zumindest in axialer Höhe des Seileinlaufes aus unter der Kraftwirkung der Rückstrammvorrichtung in radialer Richtung leicht wegbrechbarem Material bzw. Wandelementen besteht.

Auf diese Weise erreicht man, daß durch eine zweite Seilwindung, welche sich in Höhe des Seileinlaufes auf eine erste Windung auflegt, die Wand bzw. entsprechende Wandelemente des Kupplungsraumes nach außen wegbrechen, so daß die aufeinanderliegenden Seilwindungen sich nicht zwischen der Wand des Kupplungsraumes und der Seilscheibe verklemmen können. Man nimmt also bewußt in Kauf, daß sich mehrere Seilwindungen übereinanderlegen, ohne jedoch dabei gleichzeitig die Forderung nach kleinem Schlupf aufzugeben und auch ohne ein Verklemmen des Seils befürchten zu müssen. Einen möglichst kleinen Schlupf erreicht man, indem man das Seil in möglichst geringem Abstand um die Seilscheibe herumführt, ohne diese zu berühren. Erst beim Auslösen des Rückstraffers verringert sich durch den Zug an einem Seilende der Radius der um die Seilscheibe herumliegenden Seilschlaufen, so daß diese sich eng und kraftschlüssig an die Seilscheibe anlegen können.

Das Zugseil, welches im allgemeinen ein Stahlseil ist, steht dabei unter einer gewissen Biegespannung und ein Abstützen durch die vorzugsweise ringförmige und die Seilscheibe konzentrisch umgebende äußere Wand des Kupplungsraumes ist unbedingt erforderlich, wenn man einen gleichmäßig kleinen Abstand der um die Seilscheibe herumliegenden Seilschlaufen erreichen möchte. Dies kann jedoch auch durch eine zumindest teilweise leicht wegbrechbare Wand erreicht werden.

Erfindungsgemäß ist dabei vorgesehen, daß die leicht wegbrechbare Wand aus im Abstand voneinander ringförmig und im wesentlichen konzentrisch zur Wickelachse und, in axialer Richtung gesehen, in Höhe des Seileinlaufes angeordneten, in radialer Richtung leicht wegbrechbaren Nocken besteht, welche am Gehäuse angebracht sind.

Dabei erweist es sich als zweckmäßig, wenn der Kupplungsraum als zumindest in einer axialen Richtung offener zylindrischer Raum ausgeführt ist, an dessen Wand die lose um die Seilscheibe herumgelegten Seilwindungen anlegen, wobei sich der Seileinlauf am Rand der Zylinderöffnung befindet. Die Nocken ragen dann in Höhe des Seileinlaufes praktisch als stückweise Verlängerung der Zylinderwand über den offenen Zylinder hinaus. Am, in axialer Richtung gesehen gegenüberliegenden Ende des Zylinders ist eine tangentiale Bohrung oder auch Nut vorgesehen, welche sich auch über die gesamte Höhe des Zylinders erstrecken kann und welche als Seilauslauf dient.

In einer bevorzugten Ausführungsform der Erfindung ist vorgesehen, daß die Nocken durch in radialer Richtung nach innen weisende Ansätze als Haken ausgebildet sind.

Die Ansätze der Nocken dienen dazu, das mehr oder weniger lose an der Wand des Kupplungsraumes anliegende Seil in axialer Richtung zu sichern. Die Höhe der Ansätze kann dabei dem spiralförmigen Verlauf der oberen Seilwindung folgen.

Weiterhin können bei der erfindungsgemäßen Seilkupplung die Nocken und die Wand des Kupplungsraumes aus Kunststoff bestehen.

Die Vielfalt der Materialeigenschaften von Kunststoffen ermöglicht die leichte Auswahl von Kunststoffen, welche die gewünschten Kriterien (z.B. leicht wegbrechbare Nocken) erfüllen.

Weiterhin können erfindungsgemäß auch das Gehäuse, Seilspeicher, Seileinlauf und Seilauslauf aus Kunststoff bestehen.

Dies ermöglicht eine einfache und preiswerte Herstellungsweise des gesamten Kupplungsgehäuses und seiner wesentlichen Bauelemente. Im Falle des Seilspeichers, des Seileinlaufes und des Seilauslaufes, die ja eigentlich Hohlräume sind, bezieht sich die Materialangabe auf deren Wandungen.

In der bevorzugten Ausführungsform der Erfindung ist vorgesehen, daß die Seilbremse unmittelbar vor dem Seileinlauf angeordnet ist und aus zwei im Abstand voneinander radial nach außen weisenden Vorsprüngen der inneren Seilspeicherwand besteht, zwischen welchen von der Außenwand des Seilspeichers ein dritter Vorsprung derart nach innen ragt, daß die lichte Weite des von den drei Vorsprüngen gebildeten Engpasses in tangentialer Richtung gesehen kleiner ist als der Seildurchmesser.

Auf diese Weise erreicht man, daß das Seil nicht gerade oder mit gleichmäßiger Krümmung in den Seileinlauf gleitet, sondern in Form einer Schlangenlinie zwischen den Vorsprüngen geführt wird und an diesen Vorsprüngen reibt. Die Reibung zwischen dem Seil und den Vorsprüngen bewirkt, daß das Seil nur unter einer gewissen Mindestvorspannung durch den Seileinlauf gezogen werden kann, so daß es sich bei einem Zug auf das andere Seilende auch genügend fest an die Seilscheibe anlegt und gemäß der bereits erwähnten Eulerschen Beziehung eine kraftschlüssige Verbindung zwischen Seil und Seilscheibe erreicht wird.

Die Anordnung der Seilbremse unmittelbar vor dem Seileinlauf ermöglicht es, dem vor der Seilbremse im Seilspeicher liegenden freien Ende des Zugseiles die kürzest mögliche Länge zu geben. Diese Länge erhält man durch Multiplikation des Durchmessers einer um die Seilscheibe anliegenden Seilwindung mit dem Faktor π und mit der gewünschten maximalen Zahl der Drehungen der Wickelwelle beim Rückstrammvorgang.

Weiterhin sieht die Erfindung vor, daß die Vorsprünge der Seilbremse aus Kunststoff bestehen und daß der unmittelbar am Seileinlauf liegende Vorsprung als Seilführung eine abgerundete Oberfläche aufweist und daß die beiden anderen Vorsprünge in der Draufsicht ein im wesentlichen rechteckiges und/oder kantiges Profil haben.

Zu Beginn des Rückstrammvorganges tritt an der Zugvorrichtung bzw. am damit verbundenen Zugseil eine maximale Kraft auf, so daß auch die Vorspannung am Seileinlauf zu Beginn des Rückstrammvorganges einen entsprechend großen Wert haben muß, damit das Seil nicht auf der Seilscheibe rutscht. Die Kanten der Vorsprünge sorgen zu Beginn des Rückstrammvorganges für eine entsprechend große Reibungskraft. Da die Vorsprünge jedoch aus Kunststoff bestehen, werden sie von dem durch die Bremse rutschenden Seil abgerieben und abgerundet. Der am Seileinlauf liegende Vorsprung erfäht nur einen geringen Abrieb und sorgt für eine gleichmäßige Führung im Seileinlauf. Gegen Ende des Rückstrammvorganges ist die Zugkraft der Zugvorrichtung deutlich geringer, so daß auch nur eine geringere Vorspannung benötigt wird. Die abgerundeten Kanten des zweiten und dritten Vorsprunges bremsen das Zugseil weniger stark und sorgen somit für eine günstige Anpassung der Vorspannung an die Zugkraft, so daß ein maximaler Energiebetrag für das Straffen des Sicherheitsgurtes zur Verfügung steht und nicht durch überflüssige Reibungskräfte in der Seilbremseinrichtung verloren geht. Zusammen mit der leicht wegbrechbaren Wand des Kupplungsraumes ermöglicht auch diese Maßnahme in vorteilhafter Weise eine entsprechend kleinere Dimensionierung der Zugvorrichtung.

In der bevorzugten Ausführungsform der Erfindung verbindet eine im wesentlichen U-förmige Haltekrampe auf der axial offenen Seite des Seilspeichers (bzw. der Seilbremse) den abgerundeten Vorsprung mit der gegenüberliegenden Außenwand des Seilspeichers.

Diese Haltekrampe nimmt in vorteilhafter Weise die beim Rückstrammvorgang auf den abgerundeten Vorsprung durch das Zugseil ausgeübten Kräfte auf, die ansonsten zum Abbrechen dieses Bauelementes führen könnten.

Weitere Vorteile, Merkmale und Anwendungsmöglichkeiten der vorliegenden Erfindung werden deutlich anhand der folgenden Beschreibung einer bevorzugten Ausführungsform und den dazu gehörigen Zeichnungen. Es zeigen:

Figur 1 einen axialen Schnitt durch eine erfindungsgemäße Kupplungsvorrichtung und

Figur 2 einen Schnitt entlang der Linie II—II in Figur 1.

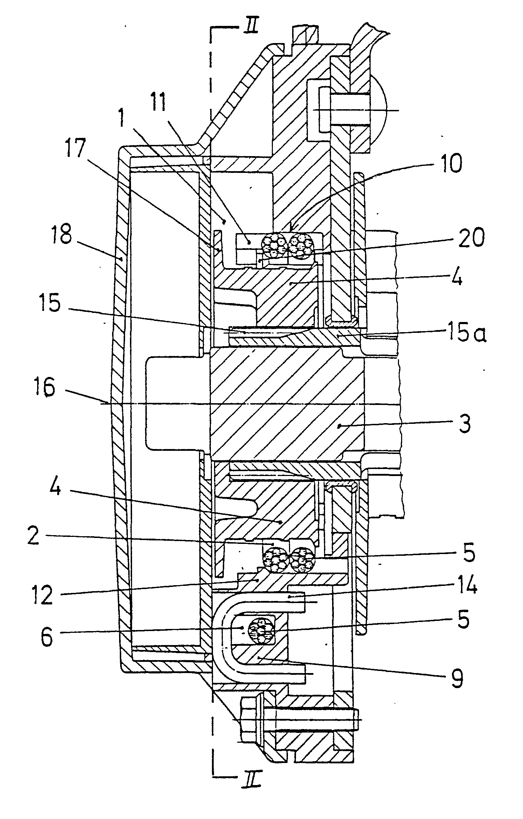

In Figur 1 erkennt man die wesentlichen Teile der Kupplungsvorrichtung 1. Die Kupplungsvorrichtung 1 besteht aus der Seilscheibe 4, welche über die Verzahnungen 15 und 15a mit der Wickelwelle 3 kraftschlüssig verbunden ist, sowie aus dem Kupplungsraum 2, an dessen zylindrischer Wand 10 ein Stahlseil 5 in vorzugsweise ein bis zwei Windungen in geringem Abstand zur Seilscheibe 4 anliegt.

Von der Seilbremse 9 ist im Schnittbild der Figur 1 nur die den abgerundeten Vorsprung 12 sichernde Haltekrampe 14 zu erkennen, durch welche das Zugseil auch in axialer Richtung vor dem Seileinlauf 8 gesichert wird. Der Seileinlauf 8 liegt etwa auf Höhe der Kante des zylindrischen Kupplungsraumes 2. Nocken 11 bilden in axialer Richtung eine Verlängerung der zylindrischen Wand 10 des Kupplungsraumes 2 und weisen in radialer Richtung nach innen ragende Ansätze 20 auf, durch welche das Seil 5 im Ausgangszustand in axialer Richtung gesichert wird.

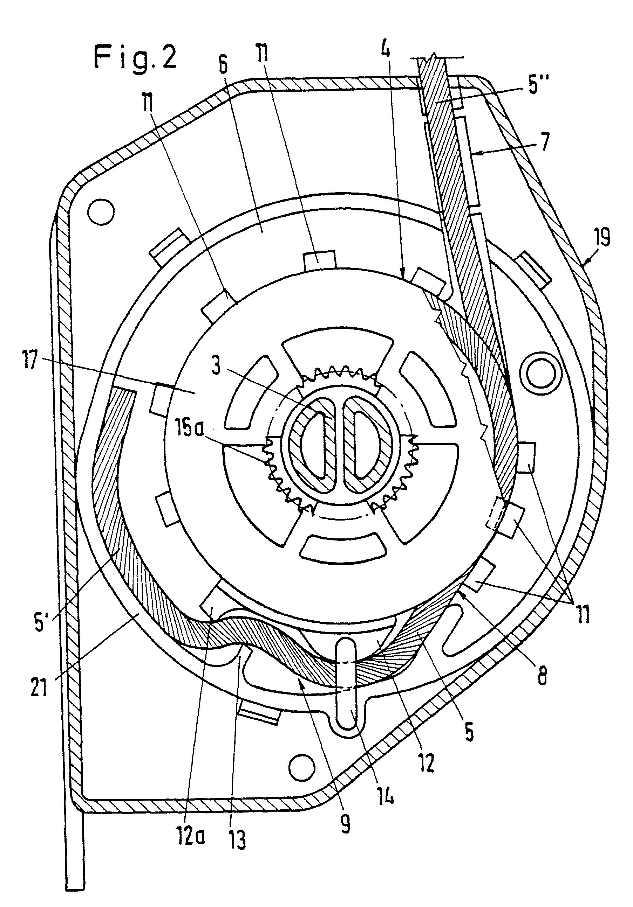

Figur 2 ist eine Seitenansicht der Kupplungsvorrichtung entsprechend einem Schnitt der Linie II—II in Figur 1.

In dieser Seitenansicht erkennt man noch deutlicher die Nocken 11, welche die Seilscheibe 4 ringförmig umgeben. Die Seilscheibe 4 weist einen angesetzten Sicherungsring 17 auf, welche in Figur 2 teilweise abgebrochen dargestellt ist, um das darunterliegende Seil 5 sichtbar zu machen. Das freie Seilende 5' verläuft im Seilspeicher 6, wird durch die Seilbremse 9 in den Seileinlauf 8 geführt und ist in ein bis zwei Windungen lose um die Seilscheibe 4 herumgelegt, wobei es sich aufgrund seiner Eigenspannung an die zylindrische Wand 10 des Kupplungsraumes 2 anlegt. Das Zugende 5'' des Seiles 5 ist mit einer nicht dargestellten Zugvorrichtung verbunden.

Diese Zugvorrichtung ist im allgemeinen ein in einem Zylinder beweglichen Kolben, welche beispielsweise durch eine Gaspatrone angetrieben werden kann.

Beim Auslösen der Rückstrammeinrichtung wird dieser Kolben mit großer Kraft und Geschwindigkeit in den entsprechenden Zylinder hineingetrieben und nimmt dabei das Zugseil 5 an seinem Zugende 5'' mit. Zu Beginn dieses Vorganges legt sich dabei das Zugseil 5 zunächst eng an die Seilscheibe 4 an, da das freie Seilende 5' durch die Seilbremse 9 noch in seiner Position gehalten wird. Der dabei auftretende Schlupf, d.h.

der Seilweg bzw. der Kolbenweg im Zylinder der Zugvorrichtung, der ohne Drehung der Seilscheibe 4 und der damit verbundenen Wickelwelle 3 zurückgelegt wird, ergibt sich durch Multiplikation des lichten Abstandes zwischen Seil und Seilscheibe im Ausgangszustand mit dem Faktor 2π und der Zahl der um die Seilscheibe herumgelegten Windungen. Bei einem lichten Abstand von 1 mm und zwei Windungen ergäbe sich damit ein Schlupf von etwa 12 bis 13 mm.

Sobald das Seil 5 fest um die Seilscheibe 4 anliegt, wird diese bei weiterem Zug am Zugende 5'' des Seiles 5 zusammen mit der Wickelwelle 3 gedreht. Dabei wickelt sich das Seil 5 zum Zugende 5'' hin von der Seilscheibe 4 ab, während das freie Seilende 5' durch die Seilbremse 9 und durch den Seileinlauf 8 hindurchgezogen und auf die Seilscheibe 4 aufgewickelt wird.

Die Seilbremse 9 besteht aus zwei radialen Vorsprüngen der Seilspeicherinnenwand, welche ansonsten von den Nocken 11 gebildet wird, und welche im Bereich der Seilbremse 9 als zusammenhängendes Teilkreisstück ausgeführt ist, und aus einem der Lücke zwischen den beiden Vorsprüngen 12, 12a gegenüberliegenden Vorsprung 13, welcher von der Außenwand 21 des Seilspeichers 6 nach innen ragt, und zwar derart, daß die lichte Weite zwischen den Vorsprüngen 12, 12a und 13 in tangentialer Richtung gesehen deutlich kleiner ist als der Durchmesser des Seiles 5. Dabei ist der Vorsprung 12 als Seilführung abgerundet während die Vorsprünge 12a und 13 an ihren Enden scharfkantig sind und im wesentlichen rechteckigen Querschnitt haben. Das Seil 5 wird auf diese Weise in einer Schlangenlinie geführt und übt aufgrund seiner inneren Spannung entsprechende Reibungskräfte insbesondere auf die scharfen Kanten der Vorsprünge 12a und 13 aus. Die Reibungskraft im Bereich der Seilbremse 9 sorgt für eine genügend hohe Vorspannung des Seiles im Bereich des Seileinlaufes 8, welche erforderlich ist, damit das Seil 5 nicht auf der Seilscheibe 4 rutscht und die Verbindung zwischen beiden kraftschlüssig bleibt.

Mit Ausnahme der Wickelwelle 3 der Seilscheibe 4, des Zugseiles 5 und der Haltekrampe 14 sind alle in Figur 2 dargestellten Teile aus Kunststoff gefertigt, insbesondere auch die Vorsprünge 12a und 13, so daß ihre Kanten während des Rückstrammvorganges durch das Seil 5 abgerieben bzw. abgerundet werden. Die Reibungskraft in der Seilbremse 9 läßt damit allmählich nach, was auch erwünscht ist, da auch die Zugspannung am Zugende 5'' des Seiles 5 im Verlaufe des Rückstrammvorganges nachläßt. Auf diese Weise vermeidet man unnötige Reibungsverluste in der Seilbremse 9.

Das freie Ende 5' des Seiles 5 muß eine ausreichende Länge haben, damit gegen Ende des Rückstrammvorganges durch die Seilbremse 9 noch eine Vorspannung des Seiles 5 im Seileinlauf 8 aufrechterhalten werden kann. Die erforderliche Länge ergibt sich aus dem Produkt der maximalen Zahl der Umdrehungen der Wickelwelle, die beim Rückstrammvorgang möglicht sind, mit dem Durchmesser einer um die Seilscheibe anliegenden Seilwindung und mit der Zahl der Windungen. Ausreichend ist es auf jeden Fall, wenn das über die Seilbremse 9 hinausragende freie Ende 5' des Seiles 5 der Länge entspricht, welche beispielsweise der Kolben einer Zugvorrichtung in seinem Zylinder zurücklegen kann.

Da das Seil 5 im Seileinlauf 8 unter Vorspannung steht und in axialer Richtung praktisch nicht ausweichen kann, während gleichzeitig durch den Auf- und Abwickelvorgang bedingt die jeweils um die Seilscheibe anliegenden Windungen in axialer Richtung wandern, legt sich nach einer gewissen Zahl von Umdrehungen der Seilscheibe während des Rückstrammvorganges das durch den Seileinlauf 8 geführte Seil 5 auf eine bereits vorhandene Seilwindung auf. Da der radiale Abstand zwischen Seilscheibe 4 und der Wand 10 des Kupplungsraumes 2 jedoch zur Vermeidung eines überlangen Schlupfes möglichst klein gehalten wird, ist in diesem Raum nicht genügend Platz für zwei aufeinanderliegende Windungen des Seiles 5.

Die Wand 10 des Kupplungsraumes 2 besteht in Höhe des Seileinlaufes 8 jedoch aus leicht wegbrechbaren Nocken 11, welche durch die große Kraft, die durch die Zugvorrichtung auf das Seil ausgeübt wird, von der sich auflegenden zweiten Seilwindung weggebrochen werden. Auf diese Weise wird ein Verklemmen der beiden aufeinanderliegenden Seilwindungen zwischen der Wand 10 des Kupplungsraumes 2 und der Seilscheibe 4 vermieden. Insbesondere ist die Seilscheibe nach erfolgtem Rückstrammvorgang auch wieder frei beweglich, da das Seil 5 keine Zugbelastung mehr erfährt und aufgrund seiner Eigenspannung sich in den in radialer Richtung zur Verfügung stehenden Raum hin ausdehnt.

Die erfindungsgemäße Seilaufnahme für die Kupplungsvorrichtung läßt also trotz eines geringen Schlupfes während des Kupplungsvorganges das Aufeinanderliegen mehrerer Seilwindungen ohne Verklemmen zu und beansprucht daher auch in axialer Richtung weniger Raum als eine Seilaufnahme, bei welcher beispielsweise der Seileinlauf in axialer Richtung mit den Windungen wandern würde.

**Patentansprüche**

1. Seilaufnahme für die Seilkupplung (1) einer Rückstrammvorrichtung für einen Sicherheitsgurtaufrollautomaten, mit einem Gehäuse (19) und mit einem Kupplungsraum (2) in welchem ein eine Wickelwelle (3) bzw. eine mit dieser kraftschlüssig verbundene Seilscheibe (4) im Abstand mindestens teilweise umschlingendes Seil (5) reibschlüssig mit der Wickelwelle (3) bzw. der Seilscheibe (4) in Verbindung bringbar ist, einem Seilspeicher (6) für den freien Endabschnitt des Seiles (5), einem Seilauslauf (7) für das aus dem Kupplungsraum (2) geführte, mit einer Zugvorrichtung verbundene Seil (5), einem Seileinlauf (8) vom Seilspeicher (6) in den Kupplungsraum (2) hinein und einer Seilbremse (9), durch welche das Seil (5) geführt ist, vor dem Seileinlauf (8), dadurch gekennzeichnet, daß die den Kupplungsraum nach außen abschließende Wand (10) zumindest in axialer Höhe des Seileinlaufes (8) aus unter der Krafteinwirkung der Rückstrammvorrichtung in radialer Richtung leicht wegbrechbarem Material bzw. Wandelementen (11) besteht.

2. Seilaufnahme nach Anspruch 1, dadurch gekennzeichnet, daß die leicht wegbrechbare Wand aus im Abstand voneinander ringförmig und im wesentlichen konzentrisch zur Wickelachse (16) und, in axialer Richtung gesehen, in Höhe des Seileinlaufes (8) angeordneten in radialer Richtung leicht wegbrechbaren Nocken (11) besteht, welche am Gehäuse (19) angebracht sind.

3. Seilaufnahme nach Anspruch 2, dadurch gekennzeichnet, daß die Nocken (11) durch in radialer Richtung nach innen weisende Ansätze als Haken ausgebildet sind.

4. Seilaufnahme nach Anspruch 2 oder 3, dadurch gekennzeichnet, daß die Nocken (11) und die Wand (10) des Kupplungsraumes (2) aus Kunststoff bestehen.

5. Seilaufnahme nach einem oder mehreren der Ansprüche 1 bis 4, dadurch gekennzeichnet, daß Seilspeicher (6), Seileinlauf (8) und Seilauslauf (7) aus Kunststoff bestehen.

6. Seilaufnahme nach einem oder mehreren der Ansprüche 1 bis 5, dadurch gekennzeichnet, daß die Seilbremse (9) aus zwei unmittelbar vor dem Seileinlauf (8) und im Abstand voneinander angebrachten, radial nach außen weisenden Vorsprüngen (12, 12a) der inneren Seilspeicherwand besteht, zwischen welchen von der Außenwand des Seilspeichers ein dritter Vorsprung (13) derart nach innen ragt, daß die lichte Weite des von den drei Vorsprüngen (12, 12a, 13) gebildeten Engpasses in tangentialer Richtung gesehen kleiner ist als der Seildurchmesser.

7. Seilaufnahme nach Anspruch 6, dadurch gekennzeichnet, daß der unmittelbar am Seileinlauf (8) liegende Vorsprung (12) als Seilführung eine abgerundete Oberfläche aufweist, und daß die beiden anderen Vorsprünge (12a, 13) in der Draufsicht ein im wesentlichen rechteckiges und/ oder kantiges Profil haben.

8. Seilaufnahme nach Anspruch 6 oder 7, dadurch gekennzeichnet, daß eine im wesentlichen U-förmige Haltekrampe (14) auf der axial offenen Seite des Seilspeichers (6) den abgerundeten Vorsprung (12) mit der gegenüberliegenden Außenwand des Seilspeichers verbindet.

**Revendications**

1. Dispositif récepteur de câble pour l'accouplement du câble (1) d'un dispositif de rappel et de raidissement pour ceinture de sécurité à enrouleur comportant un boîtier (19) et une chambre de couplage (2) avec un arbre d'enroulement (3) et une poulie à câble (4) fixée sur celui-ci et entraînée par frottement, dans laquelle peut s'enrouler, au moins en partie, autour dudit arbre d'enroulement et de ladite partie à câble, entraîné par frottement un câble (5), un magasin de stockage de câble (6) pour l'extrémité libre du câble (5), une sortie de câble (7) pour le câble (5) sortant de la chambre de couplage (2) et qui est reliée à un dispositif de traction, une entrée de câble (8) allant du magasin de câble (6) à la chambre de couplage (2) et un frein de câble (9) par lequel passe le câble (5) avant l'entrée de câble (8) caractérisé en ce que la paroi extérieure (10) qui ferme la chambre de couplage vers l'extérieur comporte au moins sur la hauteur axiale de l'entrée de câble (8) des éléments de paroi (11) ou un matériau pouvant être facilement éliminé par rupture sous l'effet de la force exercée par le dispositif de rappel et de raidissement dans la direction axiale.

2. Récepteur de câble selon la revendication 1 caractérisé en ce que la paroi pouvant être facilement éliminée par rupture est constituée d'ergots (11) pouvant être facilement brisés dans une direction radiale et qui sont disposés en cercle à intervalles réguliers et sensiblement concentriques par rapport à l'axe d'enroulement (16) et qui, vus dans la direction axiale, au niveau de l'entrée de câble (8), sont fixés sur le boîtier (19).

3. Récepteur de câble selon la revendication 2 caractérisé en ce que les ergots (11) sont, dans la direction radiale, constitués de pattes dirigées vers l'intérieur et ayant la forme de crochets.

4. Dispositif récepteur selon l'une des revendications 2 ou 3 caractérisé en ce que les ergots (11) et la paroi (10) de la chambre de couplage (2) sont réalisés en matière plastique.

5. Dispositif récepteur de câble selon une ou plusieurs des revendications 1 à 4 caractérisé en ce que le magasin (6), l'entrée de câble (8) et la sortie de câble (7) sont réalisés en matière plastique.

6. Dispositif récepteur de câble selon une ou plusieurs des revendications 1 à 5 caractérisé en ce que le frein de câble (9) comporte deux saillies (12, 12a) situées immédiatement devant l'entrée de câble (8) et à une certaine distance l'une de l'autre, en étant dirigées radialement vers l'extérieur, prévues sur la paroi interne du magasin de câble et entre ces deux saillies se trouve une troisième saillie (13) qui, partant de la paroi externe du magasin, est dirigée vers l'intérieur de telle manière que l'étroit passage formé par ces trois saillies (12, 12a, 13), présentant une faible largeur si l'on considère la direction tangentielle, est plus petit que le diamètre du câble.

7. Dispositif récepteur de câble selon la revendication 6 caractérisé en ce que la saillie (12) située immédiatement à l'entrée de câble (8) présente une surface arrondie assurant le guidage du câble et en ce que les deux autres saillies (12a, 13) ont, vues de dessus, une forme sensiblement à angle droit et/ou présentent un profil à angles vifs.

8. Dispositif récepteur de câble selon la revendication 6 ou la revendication 7 caractérisé en ce qu'un moyen de serrage et d'arrêt (14) ayant la forme d'un U relie, sur le côté axial ouvert du magasin (6), la saillie arrondie (12) à la paroi externe du magasin (6) située en vis-à-vis.

## Claims

1. A cable mounting for the cable coupling (1) of a take-up tightening device for an automatic safety belt retraction apparatus, comprising a housing (19) and a coupling space (2) in which a cable (5) which at least partially passes at a spacing around a winding shaft (3) or a cable pulley (9) force-lockingly connected to the winding shaft can be brought into frictional engagement with the winding shaft (3) or the cable pulley (4), a cable storage means (6) for the free end portion of the cable (5), a cable exit (7) for the cable (5) which is passed out of the coupling space (2) and which is connected to a pulling means, a cable entry (8) from the cable storage means (6) into the coupling space (2) and a cable brake (9) through which the cable (5) is passed, in front of the cable entry (8), characterised in that the wall (10) which closes off the coupling space in an outward direction comprises, at least at the axial level of the cable entry (8), wall elements (11) or material which can easily break away in the radial direction under the effect of the force of the take-up tightening device.

2. A cable mounting according to claim 1 characterised in that the wall which can easily break away comprises projections (11) which can easily break away in a radial direction and which are arranged at a spacing from each other and in an annular configuration and substantially concentric with respect to the winding axis (16) and, as viewed in the axial direction, at the level of the cable entry (8), the projections (11) being disposed on the housing (19).

3. A cable mounting according to claim 2 characterised in that the projections (11) are in the form of hooks, by virtue of lug portions which face inwardly in a radial direction.

4. A cable mounting according to claim 2 or claim 3 characterised in that the projections (11) and the wall (10) of the coupling space (2) comprise plastics material.

5. A cable mounting according to one or more of claims 1 to 4 characterised in that the cable storage means (6), the cable entry (8) and the cable exit (7) comprise plastics material.

6. A cable mounting according to one or more of claims 1 to 5 characterised in that the cable brake (9) comprises two radially outwardly pointing projections (12, 12a) on the inner wall of the cable storage means, the projections being arranged immediately in front of the cable entry (8) and at a spacing from each other and a third projection (13) projecting inwardly between the projections (12, 12a) from the outside wall of the cable storage means, in such a way that the internal width of the constriction formed by the three projections (12, 12a, 13), as viewed in the tangential direction, is smaller than the cable diameter.

7. A cable mounting according to claim 6 characterised in that the projection (12) which is disposed immediately at the cable entry (8) has a rounded surface as a cable guide means and that the other two projections (12a, 13), in plan view, are of a substantially right-angled and/or angular profile.

8. A cable mounting according to claim 6 or claim 7 characterised in that a substantially U-shaped holding clamp (14) on the axially open side of the cable storage means (6) connects the rounded projection (15) to the oppositely disposed outside wall of the cable storage means.

EP 0 244 432 B1

Fig.2

2